Europäisches Patentamt

European Patent Office

Office européen des brevets

(11) Publication number:

**0 023 809**
A1

(12) EUROPEAN PATENT APPLICATION

(21) Application number: 80302556.8

(22) Date of filing: 25.07.80

(51) Int. Cl.³: **G 11 B 7/24,** G 11 B 7/00,
B 41 M 5/24

(30) Priority: 27.07.79 US 61562

(43) Date of publication of application: 11.02.81
Bulletin 81/6

(84) Designated Contracting States: **DE GB NL**

(71) Applicant: XEROX CORPORATION, Xerox Square - 020,
Rochester New York 14644 (US)

(72) Inventor: Ward, Anthony T., 934 Little Pond Way, Webster
New York 14580 (US)
Inventor: Smith, Thomas W., 158 New Wickham Drive,
Penfield New York 14526 (US)

(74) Representative: Goode, Ian R. et al, European Patent
Attorney c/o Rank Xerox Limited, Patent Dept. Rank
Xerox House 338 Euston Road, London NW1 3BH (GB)

(54) Optical recording member.

(57) An optical recording member for optical recording and
retrieval of information which comprises a reflective sub-
strate (11) having coated thereon a thin layer (12) of an
optical dielectric material and a thin layer (13) of tellurium
on the dielectric layer. Marking of the recording member is
achieved by the use of a laser controlled in accordance
with the information to be recorded. The construction of
the tellurium and the dielectric layers is such as to achieve
anti-reflecting conditions at the marking wavelength to ob-
tain maximum efficiency. Other layers (16, 17, 19) may be
provided in the optical recording member to facilitate the
manufacturing process, to provide strength or protection,
and for other purposes.

## OPTICAL RECORDING MEMBER

This invention relates to an optical recording member for optically recording and retrieving information thereon by means of optical radiation of a marking wavelength and a reading wavelength respectively. The member includes a reflective substrate having coated thereon a layer of an optical dielectric material, and a layer of a recording medium on said dielectric material.

It is known in the prior art to construct an optical recording member, to optically record information on such a member and to optically recover information from such a member. In Landwer U.S. Patent 3,825,323, there is disclosed a "laser writing" or recording process used to generate a memory by localized melting of selected areas along recording tracks in the surface of a thermoplastic film. In such a process, the laser beam is selectively focused on the surface of the film. In recording binary data on such an optical recording member, the melted depressions and areas with no melts correspond to the bits of information l's and 0's. Such recorded information can be optically read out later by various known means. Due to the extremely small size of the focused laser beam which is used, a very large amount of information can be recorded on a given area of such an optical recording member. For example, Landwer reports that over 620,000 individual bits of binary data have been recorded per square cm of record surface. It is clear that such a memory device for information has great utility.

In Spong U.S. Patent 4,097,895, there is disclosed a multilayer optical record which is made of a glass substrate, a thin reflective layer of metal, and a topcoat of an organic dye. An information track may be formed on the surface of such an optical record by exposing it to a laser beam which is controlled in accordance with the information to be recorded. The information track is composed of a series of spaced pits formed by the vaporization of the organic dye in the areas exposed to high intensity beam. Similarly, in Bloom et al U.S. Patent 4,023,185, other organic dyes useful in ablative optical recording medium are disclosed.

In an article entitled "Optical Disk Systems Energy" by Bartolini et al in the August 1978 issue of IEEE Spectrum, the state of the art as of the time of the publication for laser powered recording systems with "instant" playback was discussed with a list of references included. In that article, there is disclosed a trilayer device having a titanium layer as the recording medium on a silicon dioxide dielectric layer which, in turn, is on top of an aluminum reflector layer. The purpose of the multilayer configuration is to increase the fraction of the recording beam that is absorbed by the recording medium thus to increase the efficiency of the recording system. Bartolini et al selected titanium as the material for the recording medium despite the fact that titanium has a high melting point. The high melting point of titanium is a disadvantage both in the fabrication process and when the optical disk is used to record information. In recording information, the amount of energy required to make a mark in the recording medium is clearly related to the thickness of that layer as well as the melting point of that layer. A high melting point material would require more energy to melt it and make a pit therein.

Since the laser or writing instrument must melt or ablate the active layer in such an optical recording member to form a melted depression or a pit in the active layer to record a bit of information, it is clear that the size of the laser apparatus required as well as the amount of energy consumed per bit depend on the nature of the materials which make up the active layer as well as the thickness of that layer. For example, the active layer should have a high absorbance at the wavelength of the writing-laser beam. The active layer should also be as thin as possible to minimize the amount of energy required for ablation. Other factors to be considered in determining the materials to be used in the active layer include ease of handling and fabrication, stability before and after information has been recorded on the recording member, and that those materials be inexpensive, readily available and economical to use in the fabricating process. Accordingly, there is a need for improved optical recording members of the type indicated above.

The present invention is intended to provide such an improved optical recording member, and is characterised in that the recording medium is tellurium, and the thickness of the dielectric material and recording medium layers are chosen to obtain anti-reflection conditions at the marking wavelength and to obtain optical contrast between marked and unmarked areas at the reading wavelength.

The optical recording member of the invention has the advantages that it is relatively inexpensive to make, stable in handling and storage, sensitive to the beams from presently available laser apparatus, and capable of being manufactured at the high quality necessary for optical information storage purposes.

The terms "dielectric" or "optical dielectric" as used herein are defined as any of the inorganic oxides or organic polymers which are optically transparent and possessing relatively low thermoconductivity. The optical recording member may be protected on either or both sides by protective layers. The protective layer on top of the tellurium layer should be transparent to the writing and reading laser beams.

Embodiments of an optical recording member in accordance with the invention will now be described with reference to the accompanying drawings, in which:-

Figure 1 is a cross-sectional view of one embodiment of the optical recording member of the present invention;

Figure 2 is a cross-sectional view of a mark made on the optical recording member of Figure 1;

Figure 3 is a cross-sectional view of another embodiment of the optical recording member of the invention;

Figure 4 is a cross-sectional view of a further and preferred embodiment of the optical recording member of the invention; and

Figure 5 is a block diagram of a system for recording and retrieving the information from the optical recording member of the invention.

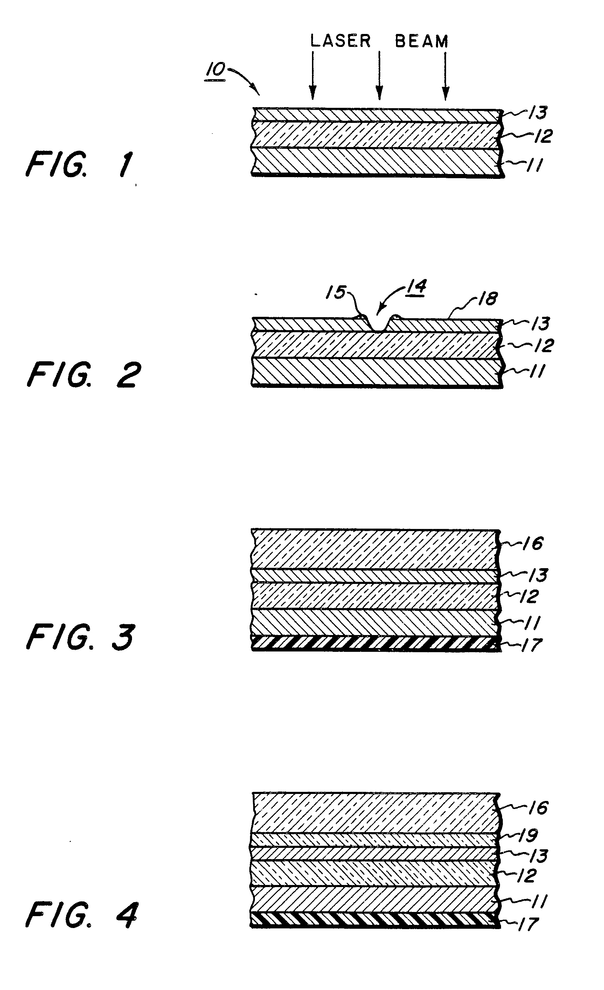

Referring to Figure 1, an optical recording member 10 in accordance with the present invention is shown to be composed of three layers: a reflector layer 11, an optical dielectric layer 12 thereon, and a thin layer of tellurium 13 on the dielectric layer 12. Although reflector layer 11 may be made of any material that has a relatively high reflectivity and imparts to the optical recording member sufficient structural strength, as a practical matter aluminum is the preferred material for this layer because of its high reflectivity and relative availability as well as ease in fabrication. Other examples of materials which may be used to form reflector layer 11 are aluminized glass or aluminized polymer substrates. The thickness of the aluminum layer is not critical, particularly where the aluminum layer does not have to furnish the structural strength or rigidity to the optical recording member. We have found that where the aluminum layer is not responsible for the structural rigidity of the optical recording member, a thickness of about 1,000 to 2,000 Angstroms is preferred since this insures that the layer will be continuous with maximum reflectivity.

- 4 -

0023809

The dielectric layer 12 may be made of any material that is optically transparent and has a relatively low thermoconductivity. Examples of such materials are various inorganic oxides such as silicon dioxide, titanium dioxide, and aluminum oxide, etc., and various organic polymers such as polystyrene, polymethylmethacrylate, a polysiloxane, a poly(fluoralkoxy phosphazene), a flexible acrylic copolymer, or poly(tetra fluoroethylene), etc. The organic polymer dielectric materials are particularly preferred because they have lower thermoconductivity than the oxides such as silicon dioxide. Aside from its function in the attainment of antireflecting conditions, to be described below, the dielectric layer also serves as a thermal insulator for the tellurium layer 13 so that the energy in the laser beam that is coupled to or absorbed by the tellurium layer would not be partially lost through conduction to layer 12. In addition, organic dielectric materials are generally more deformable than inorganic dielectric materials such as silicon dioxide and thus more readily accommodate the ablated tellurium in the marking process. The thickness of the dielectric layer 12 is determined by calculations to achieve antireflecting conditions, to be explained below. Generally, the dielectric layer 12 has a thickness in the order of several hundred to several thousand Angstroms. The dielectric layer 12 may be formed by techniques well known in the art, for example by solution coating, evaporation depolymerization/polymerization, or by plasma polymerization.

It is desirable to keep the tellurium layer as thin as possible so that the least amount of energy would be required to make a mark therein. However, the thickness of the tellurium layer is one of the factors in achieving antireflecting conditions. Thus, the thickness of the tellurium layer in any particular embodiment of the optical recording member of the present invention should be determined by taking into account the nature of the reflecting layer, the nature and thickness of the dielectric layer, as well as the nature of any overcoating material on the tellurium layer. In addition to achieving antireflecting conditions, the thickness or thinness of the tellurium layer is also limited by the requirement that the tellurium layer must be continuous, of relatively uniform thickness, and substantially free from pinholes. We have found that tellurium layers in the range of about 20 to 150 Angstroms can be made with extremely good results.

By the term "antireflecting conditions", it is meant that the incident radiation on the optical recording member is substantially entirely absorbed by the recording member, and very little of the incident radiation is reflected. Since the reflector layer is also highly reflecting, and thus does not absorb much of the incident radiation, and since the dielectric layer and any overcoating layer are essentially transparent and they also do not absorb much of the incident radiation, most of the energy in the laser beam is absorbed by the tellurium when antireflecting conditions are achieved. This represents the maximum use of the energy in the laser beam for marking purposes. As indicated above, the antireflecting conditions are achieved by taking into consideration the thicknesses of the tellurium and the dielectric layers, their indices of refraction, and the reflectivity of the reflector layer, to result in the cancellation of electric vector phase and amplitude at any given incident wavelength. Once the material for the dielectric layer has been determined, the thicknesses of the dielectric layer and the tellurium layer can be calculated from the classical simulation routines of ellipsometry. Such calculations are well known in the art and are shown for example in F.L. McCrackin, NBS Technical Note No. 479 (1969), and in Spong U.S. Patent 4,097,895. These routines permit the calculation of the effective refractive index, absorption constant and reflectivity of a thin film multilayer device as a function of component layer thickness and refractive index, incident light wavelength, angle of incidence and ambient refractive index.

Although it is important for the optical recording member to achieve antireflecting conditions at the marking wavelength, it is also desirable to have its reflectivity at the read-out wavelength somewhat greater than ten percent to facilitate dynamic optical focus control. However, if capacitive focus technique, such as that disclosed in Landwer U.S. Patent 3,825,323, is used, then the reflectivity of the unmarked device at the readout wavelength needs not be kept above a minimum level for focusing purposes.

Referring to Figure 2, a mark made in the optical recording member of Figure 1 is illustrated in a cross-sectional view. The mark 14 is essentially a hole or a pit formed in the tellurium layer 13 by the action of the writing laser beam. The tellurium formerly in the mark 14 has been melted and displaced to form a ring or ridge 15 around the mark. Due to the extreme thinness of the tellurium layer 13, we have found that often there is insufficient material ablated from the mark 14 to form a continuous ring 15. In any event, the formation of the mark 14 causes a local change in the optical property of the structure so that there is an optical contrast between the mark 14 and the unmarked areas 18 which can be discerned by a reading laser apparatus. When the optical recording member is made anti-reflecting, the unmarked areas 18 will appear dark while the mark 14 will appear relatively bright or reflecting.

A mark is generally of micron or submicron size, and the optical recording member can generally store information in the order of about 100 million bits per square centimeter. In view of the extreme small size of the marks, dust particles or other foreign materials must be excluded from the surface of the tellurium layer 13, since each dust particle may cover an area of the optical recording member which is intended for thousands of bits of information. It is normally very difficult or impossible to exclude the presence of dust, particularly when the optical recording members are in active use. Accordingly, it is preferred to provide the tellurium layer with a transparent protective layer. One embodiment having such a protective layer is shown in Figure 3. The optical recording member illustrated in Figure 3 has a substrate or protective layer 16 on the tellurium layer 13. Substrate 16 must be optically transparent and be of sufficient thickness so that any dust particles or other foreign matters present on its outer surface would be out of focus with respect to a laser beam focused on the tellurium layer 13. Since substrate 16 should be of sufficient thickness to keep dust particles out of focus, we prefer to make it of sufficient thickness so that it would also furnish the requisite structural strength to the optical recording member. Generally, we have found that a thickness of about 1 millimeter for substrate 16 is convenient and preferred, but it should be at least 0.6 mm thick to insure that foreign particles on top thereof would be out of focus with respect to the plane of the tellurium layer 13. As indicated above, substrate 16 may be made of any material that is optically transparent, such as glass. However, for ease of fabrication and handling as well as other reasons, it is preferred that the substrate 16 be made of polymeric materials, such as polymethylmethacrylate, polystyrene, a polycarbonate, cellulose acetate, a relatively rigid polyester such as poly(ethylene terephthalate), etc. Once the structural rigidity for the optical recording member is provided by substrate 16, the reflector layer 11 can be relatively thin, for example a 1,000 Angstrom layer of aluminum. To protect such a thin layer of aluminum from abrasion and other injury, we prefer to provide a very thin protective layer 17 on the outer surface of reflector layer 11. Protective layer 17 may be made of any polymeric material which will readily adhere to the reflector layer 11.

When substrate 16 is made the thickest layer in the optical recording member and provides the structural rigidity and strength therefore, it is preferred that the optical recording member be made by coating other layers on top of substrate 16 seriatim. When the thin tellurium layer 13 is coated directly onto substrate 16, a problem sometimes occurs. As indicated above, substrate 16 is preferably a polymeric material such as a one millimeter thick polymethylmethacrylate. Commercially available polymeric sheeting materials, including polymethylmethacrylate, are of insufficient uniformity in thickness to be used in the optical recording member without treatment. The variation in thickness of the surface of sheeting materials intended as substrate 16 would appear to be very large variations when compared with the thickness of the tellurium layer 13. This is shown by the fact that the thickness of the tellurium layer 13 is generally in the order of about 1/1000 of one percent of the thickness of the substrate 16. Variation in thickness or other surface imperfections impedes optical focus control. Accordingly, substrate 16 must be finely milled to obtain a layer that has a relatively uniform thickness. The degree of uniformity in thickness required depends on the numerical aperture of the read and write optics. Even a relatively uniform thickness substrate 16 would still appear to a thin tellurium layer 13 as having jagged or wavy surface. Such a wavy surface or ridges are the result of the action of the milling tool. To overcome this condition on the surface of substrate 16, we prefer to use a subbing layer 19 between the tellurium layer 13 and the substrate 16, as shown in Figure 4. The subbing layer 19 is preferably made with an optically transparent polymer, which may be the same or different polymer from the material of substrate 16. When the dielectric layer 12 is relatively rigid, such as polymethylmethacrylate or polystyrene, it is preferred that the subbing layer 19 be made of a relatively deformable and/or relatively low surface energy polymer, such as a poly siloxane elastomer, a poly (fluoralkoxy phosphazene) elastomer, a poly(perfluoroacrylate), or a flexible acrylic copolymer, etc., rather than a rigid material, so that the ablated tellurium may be permitted to leave the hole or mark to facilitate the marking process and to heighten optical contrast. Conversely when the subbing layer 19 is made of a relatively rigid material, it is preferred to make the dielectric layer 12 of a relatively deformable and/or relatively low surface energy material. Of course, both the dielectric layer 12 and the subbing layer 19 may be made of relatively deformable or rigid materials. When both of these layers are rigid, some increase in marking energy may be required.

In order for subbing layer 19 to have a very smooth surface on which the tellurium layer 13 may be deposited, it is preferred that subbing layer 19 be formed by such known and inexpensive techniques as solution coating, which includes spin coating, roll coating and dip coating. The thickness of subbing layer 19 is generally made about a micron or more. It is to be understood that when a protective substrate and/or a subbing layer are employed, their presence must be taken into consideration when calculations for achieving antireflecting conditions are made.

The tellurium layer 13 may be formed by vapor deposition techniques known in the art. Generally, calculations to establish antireflecting conditions show that a tellurium thickness of about 20 - 80$\overset{o}{A}$ is preferred for most embodiments, depending on the specific marking wavelength employed. It is difficult to obtain continuous, pinhole-free, adherent tellurium layer of such extreme thinness. However, we have found that a recently discovered method for depositing thin films of materials such as tellurium onto substrates is very suitable for this purpose. That method is disclosed in our co-pending European Patent Application No 80300764.0. Briefly, that method involves pretreating the substrate surface to create nucleation sites on the surface and thereafter deposit a thin metallic film of uniform thickness and free of pinholes.

In the preferred embodiment of the European Patent Application No 80300764.0 the pretreatment and film deposition of substrates are carried out in a low pressure vacuum chamber which is provided with a working, nonreactant gas environment, such as, argon. The substrate to be pretreated may be disk-shaped and is mounted in the chamber for rotational movement. A pair of annular planar electrodes, acting as anode and cathode, are mounted in the chamber in spaced parallel relation with their planar surfaces parallel to the surface of the substrate to be pretreated. One of the electrodes, the cathode, is mounted to be in close relationship to the substrate surface. A voltage is applied across the electrodes. By means of controlling the relationship of the working gas flow rate, the pressure in the chamber and the anode-cathode voltage, an effective and sufficiently energic plasma is generated in the system chamber. Ions from the plasma are accelerated toward and into the surface of the substrate due to the established potential difference between

0023809

the electrodes. The bombardment of the substrate surface by ions removes substrate material and creates the nucleation sites on the substrate surface. Uniform pretreatment is obtained over the surface of the substrate by rotation of the substrate in the chamber during ion bombardment.

Evaporation of the thin film follows pretreatment, by extinguishing of the plasma and evacuating the chamber of the working gas environment. The chamber pressure is then reduced to the lowest obtainable vacuum and the evaporation is initiated. A thin film, such as, tellurium, may be deposited on the rotating substrate by means of evaporation in the same chamber without breaking vacuum. A secondary shield and special apertured mask may be employed to provide for uniform deposition on the rotating surface.

In the preferred form of the apparatus of European Patent Application No 80300764.0, the pretreatment may be carried out in one location of the chamber and deposition by evaporation may be carried out in another location of the chamber, the surface of the substrate upon rotation, being exposed to each of these locations.

The above described method for pretreating and depositing thin films also may be advantageously used in depositing the thin aluminum portion of the reflector layer 11.

As shown in Figure 2 herein, when a mark 14 is made in the tellurium layer 13, a ring 15 is formed around the edge of the mark out of materials formerly occupying the space of the mark. As indicated above, when the tellurium layer 13 is surrounded by other layers, one of the immediate adjacent layers should be somewhat resilient or deformable in order to give way slightly when the ablated material leaves the hole to form the ring 15.

The advantages of the present optical recording member over those of the prior art are derived mainly from the facts that tellurium is a relatively low melting material and that it can be made into very thin pinhole free layers which when coupled with a dielectric layer and a reflector require very low marking energy to obtain readable optical contrast. The low marking energy required in turn permits lower equipment and materials costs, less heat dissipation problems, and facilitates faster marking speeds. The use of organic dielectric layers instead of inorganic oxide dielectric materials further improves the marking efficiency obtainable.

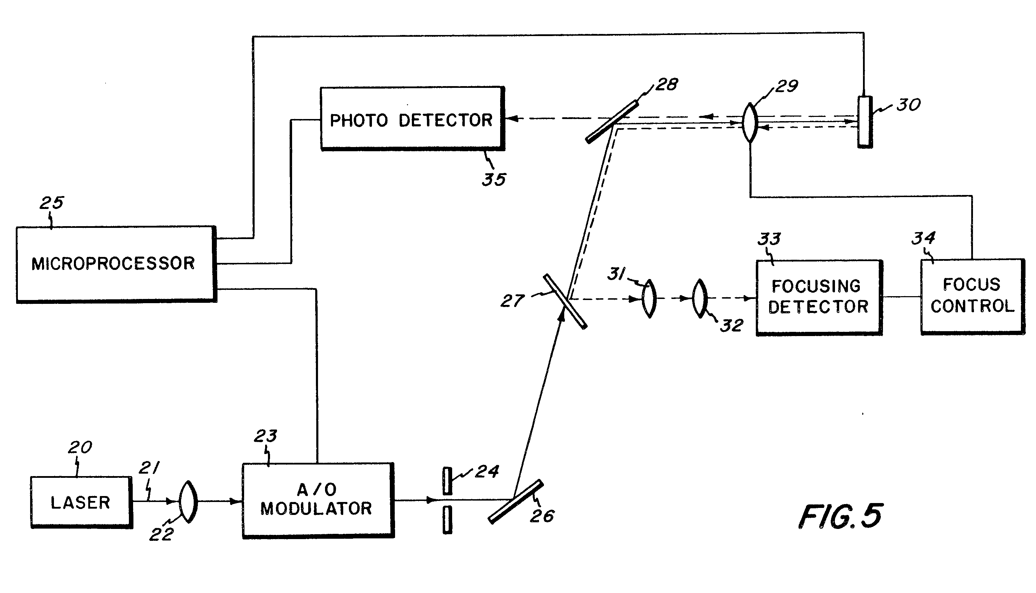

With reference to Figure 5, there is shown a schematic diagram of an apparatus which may be used to record information on the optical recording member of the present invention, as well as to read the information recorded on such a member. A beam 21 is generated by a laser device 20 and goes through a focusing lens 22 into an acousto-optic modulator 23, and from there through a hole or slit 24. The A/O modulator 23 is controlled by a microprocessor 25, and it controls both the duration and the amplitude of pulse of the beam that will be permitted to go through hole 24. A single solid state laser with internal modulation can be substituted for the laser device 20, lens 22 and A/O modulator 23. From the hole 24 the beam is directed by a reflecting mirror 26 to a beam splitter 27. Beam splitter 27 is basically a transmittor, and only a very slight amount of attenuation occurs there. From beam splitter 27, the beam is directed to another beam splitter 28, deflected there through a movable objective lens 29, and onto the optical recording member 30 of the present invention. There is a small but constant amount of leakage through the A/O modulator 23. This small amount of leakage is insufficient to cause writing on the optical recording member 30, but is reflected back along the path shown in a dotted line through a pair of cylindrical lenses 31 and 32 into a focusing detector 33. This signal will permit the focusing detector 33 to keep the movable objective lens 29 in a position to precisely focus the beam onto the optical recording member 30 through the focus control device 34.

The information is recorded on the optical recording member 30 in micron-size bits. Typically, the recording member may contain up to $10^8$ bits information per square centimeter.

When the information recorded on the optical recording member 30 is to be read out, a continuous, low powered beam from laser 20 is directed onto the recording member 30, and thence reflected back through beam splitter 28 into photodetector 35. The signal may be visually displayed on an oscilloscope or the signal may be sent onto the microprocessor 25. The positioning of the optical recording member 30, in both recording and reading processes, is controlled by the microprocessor, as shown. A separate light source having a wavelength not absorbed significantly by the optical recording member can also be used for focusing. Tracking can be achieved by conventional means.

Other apparatus for marking and reading may be used with the optical recording member of the present invention. An example of such other apparatus is disclosed in our co-pending European Patent Applications Nos 80301-339.0 and 80301338.2.

- 11 -

It should be understood that although the apparatus of Figure 5 has been described with an externally modulated laser device, the optical recording member of the present invention may advantageously be used with the recently available internally modulated gallium-arsenide injection lasers operating at 8500 Å. The use of such internally modulated lasers will result in substantial cost savings in equipment, but the optical recording members heretofore available have not been particularly sensitive or absorptive at the 8500 Å wavelength. It is an important advantage of the optical recording member of the present invention that, by adjustment of the thickness of the tellurium and dielectric layers, it can be made to achieve anti-reflecting conditions for the laser beam from any of the presently known devices. For example, calculations indicate that with an inorganic dielectric layer of $SiO_2$ at 400 Å thick, minimum reflectivity for incident radiation of 8500 Å wavelength is obtained at a tellurium layer thickness of about 50 - 90 Å; and for a 200 Å layer of $SiO_2$, the tellurium layer should be about 90 - 110 Å.

The invention will be further illustrated with the following specific examples.

## EXAMPLE I

Glass substrates were cleaned and an opaque layer of aluminum was deposited by conventional vapor deposition techniques. The aluminum layer was about 2000 Å thick. Thin films of polystyrene were spin coated onto the aluminum layer at a thickness of about 3900 Å. The spinner employed was a Headway Research Inc., EC-101 Photo Resist Spinner. The solution of polystyrene was a five percent polystyrene in xylene. The sample was then transferred to a vacuum coater and about 65 - 75 Å thick layer of polycrystalline tellurium was applied by standard thermal vapor deposition techniques.

## EXAMPLE II

The procedure of Example I was repeated except that the tellurium

-12-

layer was made about 125 Å thick.

### EXAMPLE III

The procedure of Example I was repeated except that the polystyrene layer was made about 600 Å thick and the tellurium layer was made about 150 Å thick.

### EXAMPLE IV

The procedure of Example I was repeated except that for the dielectric layer, poly(methylmethacrylate) [PMMA] was used instead of the polystyrene. The poly(methylmethacrylate) was in a form two percent PMMA in a solvent of twenty-one percent by volume ethylacetate and seventy-nine percent xylene, coated to result in a PMMA layer thickness of about 900 Å.

### EXAMPLE V

The procedure of Example IV was repeated except that the PMMA layer thickness was about 800 Å.

### EXAMPLE VI

The procedure of Example IV was repeated except that the PMMA layer was about 700 Å thick and the tellurium layer was about 150 Å thick.

### EXAMPLE VII

The procedure of Example IV was repeated except that the PMMA layer was about 4100 Å thick and the tellurium layer was about 150 Å thick.

The devices made in accordance with Examples I - VII were evaluated by laser marking tests. All of the devices showed a factor of 3 - 5 fold improvement in threshold sensitivity as compared to a standard optical disk of about 150 Å layer of tellurium on PMMA. The marking was carried out with 100 nanosecond pulses at 5145 Å, and with 10 nsec. pulses at 5800 Å and at 8350 Å. It should be noted that the marking of the tellurium standard optical disk produces black marks on a reflective background while marking of the devices of Examples I - VII produces reflective marks on a background which at 5145 Å is essentially black. The improvement in threshold sensitivity means that comparable readout contrast may be achieved at 1/5 the incident laser power. For example, at a marking wavelength of 5145 Å, the device of Example I required 3.6 mW of incident laser power to achieve a change in reflectivity of 41.5 percent, whereas the standard optical disk required an incident laser power of 18.5 mW at 5145 Å to achieve a reflectivity change of 42.5 percent. Again, the device of Example I required 0.99 mW to achieve a reflectivity change of 29.5 percent, whereas the standard optical disk required 3.4 mW for the same reflectivity change, both at a marking wavelength of 5145 Å.

## EXAMPLE VIII

The devices of Examples I – VII were again prepared except that the order of depositing the aluminum layer and the tellurium layer was reversed. Thus, onto the cleaned glass substrate was first deposited the tellurium layer, then the organic dielectric layer, and finally the aluminum layer. For these devices, the incident beam was directed through the glass substrate onto the tellurium layer. The reflectivity of these devices was experimentally obtained by specular reflectance measurements, and calculated by ellipsometry involving prism-coupling of the incident beam into the device. The experimental and calculated reflectivities were in close agreement for these devices.

## EXAMPLE IX

A 23 cm circular disk was cut from a one millimeter PMMA sheet. The disk was cleaned by a series of sequential washings in ultrasonic baths of isopropanol, detergent solutions and water. The disk was spin dried after a final isopropanol rinse. The cleaned disk was first spin coated with a 1 micron subbing layer of PMMA and then aluminized with a 2000 Å thick layer of aluminum in a vacuum coater. A dielectric layer of 800 Å thick PMMA was then applied by spin coating. Finally, a 25 Å thick layer of crystallographically oriented tellurium was deposited by a thermal evaporation procedure with simultaneous plasma cleaning of the disk surface in accordance with the disclosure of European Patent Application No 80300764.0.

## EXAMPLE X

The procedure of Example IX was repeated except that the tellurium layer was made 35 Å thick.

## EXAMPLE XI

The procedure of Example IX was repeated except that the tellurium layer was a 50 Å thick layer of polycrystalline tellurium deposited by an electron beam evaporation technique.

## EXAMPLE XII

The procedure of Example XI was repeated except that the dielectric layer was made to be a 3600 – 3800 Å thick PMMA, and the tellurium layer was made 75 Å thick.

- 14 -

The devices made in accordance with Examples IX-XII were subjected to dynamic laser marking and readout on an apparatus generally as disclosed in European Patent Application No 80301338.2. The apparatus was equipped with a He-Cd laser for writing at 4416 $\overset{o}{A}$ and a He-Ne laser for readout at 6328 $\overset{o}{A}$. The writing pulse was 100 nsec. The disk rotation speed was 1800 rpm. All of the devices were found to be marked when 3 mW of incident laser power were employed.

0023809

CLAIMS:-

1. An optical recording member for optically recording and retrieving information thereon by means of optical radiation of a marking wavelength and a reading wavelength respectively, including a reflective substrate (11) having coated thereon a layer (12) of an optical dielectric material, and a layer (13) of a recording medium on said dielectric material, characterised in that the recording medium is tellurium, and the thicknesses of the dielectric material and recording medium layers (12, 13) are chosen to obtain anti-reflection conditions at the marking wavelength and to obtain optical contrast between marked and unmarked areas (14, 18) at the reading wavelength.

2. An optical recording member according to claim 1 in which a protective layer (16) is provided on said tellurium layer (13), said protective layer (16) being substantially transparent to the marking and reading optical radiations.

3. An optical recording member according to claim 2 in which said reflective substrate (11) is made of aluminum, aluminum coated glass, or aluminum coated polymer, in which said protective layer (16) is made of a transparent material at least 0.6 mm thick, and in which said optical dielectric material (12) is silicon dioxide, a transparent metal oxide, or an optically transparent polymeric material.

4. An optical recording member according to Claim 2 or Claim 3 in which a subbing layer (19) is provided between said tellurium layer (13) and said protective layer (16).

5. An optical recording member according to claim 4 in which said subbing layer (19) is a thin layer of an optically transparent relatively deformable or relatively low surface energy polymer, such as a polysiloxane, a polyfluoralkoxy phosphazene, a flexible acrylic copolymer, or a poly(perfluoroacrylate), formed by solution coating technique to present a smooth surface for the deposition of the tellurium layer thereon, and in which said optical dielectric material (12) is an optically transparent relatively rigid polymer such as polymethylmethacrylate or polystyrene.

6. An optical recording member according to claim 4 in which said subbing layer (19) is made of polydimethyl siloxane, and in which said protective layer (16) is made of polymethylmethacrylate or polystyrene, and in which said optical dielectric material (12) is polymethylmethacrylate or polystyrene.

7. An optical recording member according to claim 4 in thich said protective layer (16) is a layer of polymethylmethacrylate about 1 mm thick, in which said subbing layer (19) is about 1 micron thick layer of polydimethyl-siloxane, in which said tellurium layer (13) is 20 - 150 Å thick, in which said dielectric layer (12) is made of polymethylmethacrylate, and in which said reflective substrate (11) is an aluminum layer 1000 - 2000 Å thick and coated with a thin layer (17) of a protective polymer material such as polymethylmethacrylate or a polyester on its exposed side.

8. An optical recording member according to claim 4 in which said subbing layer (19) is a thin layer of a relatively rigid optically transparent polymer formed by solution coating technique to present a smooth surface for the deposition of the tellurium layer (13) thereon, and in which said optical dielectric material (12) is an optically transparent relatively deformable or relatively low surface energy polymer.

9. An optical recording member according to claim 8 in which said subbing layer (19) is made of polymethylmethacrylate or polystyrene, and in which said optical dielectric material (12) is a polysiloxane, such as polydimethyl siloxane, a polyfluoralkoxy phosphazene, a flexible acrylic copolymer, or polytetrafluoroethylene.

10. An optical recording member according to claim 8 in which said protective layer (16) is a layer of polymethylmethacrylate about 1 mm thick, in which said subbing layer (19) is a layer of solution coated polymethylmethacrylate about 1 micron thick, in which the tellurium layer (13) is 20 - 150 Å thick, in which the optical dielectric material (12) is a thin layer of polydimethyl siloxane, and in which the reflective substrate (11) is an aluminum layer 1000 - 2000 Å thick and coated with a thin layer (17) of a protective polymer material on its exposed side.

LASER  BEAM

*10*

FIG. 1

13
12
11

FIG. 2

15    *14*    18
13
12
11

FIG. 3

16
13
12
11
17

FIG. 4

16
19
13
12
11
17

PHOTO DETECTOR 35

MICROPROCESSOR 25

FOCUSING DETECTOR 33

FOCUS CONTROL 34

LASER 20

A/O MODULATOR 23

FIG.5

| Category | DOCUMENTS CONSIDERED TO·BE RELEVANT | | CLASSIFICATION OF THE APPLICATION (Int. Cl.³) |
|---|---|---|---|
| | Citation of document with indication, where appropriate, of relevant passages | Relevant to claim | |
| D | IEEE SPECTRUM, Vol. 15, No. 8, August 1978, New York R.A. BARTOLINI et al. "Optical Disk Systems Emerge" pages 20 to 28 * pages 25 to 27; fig. 5C and 8A * --- | 1,3 | G 11 B 7/24 G 11 B 7/00 B 41 M 5/24 |
| | IEEE SPECTRUM, Vol. 16, No. 2, February 1979, New York G.C. KENNEY et al. "An Optical Disk Replaces 25 Mag Tapes" pages 33 to 38 * page 33, left-hand column * --- | 1,5 | TECHNICAL FIELDS SEARCHED (Int.Cl.³) |
| | IEEE JOURNAL OF QUANTUM ELECTRONICS, Vol. QE-14, No. 7, July 1978 New York A.E. BELL et al. "Antireflection Structures for Optical Recording" pages 487 to 495 * complete document * --- | 1 | B 41 M 5/24 G 11 B 7/00 |
| | APPLIED PHYSICS LETTERS, Vol. 34, No. 12, June 1979, New York P.M. ASBECK et al. "High-Density Optical Recording with (Ga,Al)As ·DH Lasers" pages 835 to 837 * page 835, left-hand column * --- ./.. | 1,5 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&. member of the same patent family, corresponding document

| X | The present search report has been drawn up for all claims |
|---|---|

| Place of search | Date of completion of the search | Examiner |
|---|---|---|
| Berlin | 06-11-1980 | LEITHÄUSER |

European Patent Office

**EUROPEAN SEARCH REPORT**

| DOCUMENTS CONSIDERED TO BE RELEVANT | | | CLASSIFICATION OF THE APPLICATION (Int. Cl.⁵) |
|---|---|---|---|
| Category | Citation of document with indication, where appropriate, of relevant passages | Relevant to claim | |
| | FR – A1 – 2 385 170 (LASER FILE)<br>* page 6, lines 3 to 11 *<br>--<br>US – A – 4 069 487 (CANON)<br>* claim 1; column 4, lines 3 to 19 *<br>---- | 1<br><br>2,3 | |
| | | | TECHNICAL FIELDS SEARCHED (Int. Cl.³) |

EPO Form 1503.2  06.78